# EUROPEAN PATENT APPLICATION

(11) **EP 1 648 162 A1**
(43) Date of publication of application: **19.04.2006**
(21) Application number: 04256289.2
(22) Date of filing: 12.10.2004
(51) Int. Cl.: H04N 5/225

(54) **Combined or standalone hand-held A/V camera system**

(71) Applicant: Yang, Tai-Her, Si-Hu Town, Dzan-Hwa (TW)
(72) Inventor: Yang, Tai-Her, Si-Hu Town, Dzan-Hwa (TW)
(74) Representative: Pratt, David Martin

(57) **Abstract**

A combined or standalone hand held A/V camera system that allows combined or standalone operation and is essentially comprised of a main unit, an A/V output unit and a hand-held A/V camera unit; wherein, each unit is separately provided a portable battery source, and a wired or wireless transmission device when each unit is in standalone operation mode so to provide more flexible application since all the units permit combined or standalone operation.

## Description

### BACKGROUND OF THE INVENTION

### (a) Field of the Invention

The present invention is related to a combined or standalone hand held A/V camera, and more particularly, to one that containing wired or wireless transmission device to transmit audio, video, or A/V signals when each unit is separately used characterized by that each unit is provided with its specific mechanism, circuit and independent source for combined or standalone operation.

### (b) Description of the Prior Art:

Conventional A/V cameras are generally available in stationary and hand-held models. The stationary model further includes integrated and separation types with the latter usually seen in closed circuit monitor. However there is not yet any disclosure of having the camera, the main unit and the display combined in one for hand held operation of the closed circuit monitor; meanwhile, the same absence of disclosure of standalone operation for the integrated hand held A/V camera, e.g., a digital camera or a hand held video camera including V8, Hi8, digital D8 and Dv8.

### SUMMARY OF THE INVENTION

The primary purpose of the present invention is to provide a hand held A/V camera system that allows combined or standalone operation and is essentially comprised of a main unit, an A/V output unit and a hand-held A/V camera unit; wherein, each unit is separately provided a portable battery source, and a wired or wireless transmission device when each unit is in standalone operation mode. The present invention provides more flexible application since all the units permit combined or standalone operation.

### BRIEF DESCRIPTION OF THE DRAWINGS

Fig. 1 is a schematic view showing a structure of the present invention.
Fig. 2 is a block chart showing that a main unit and an A/V output unit share an integrated structure while a hand held A/V camera relates to a standalone unit.
Fig. 3 is a block chart showing that the main unit and the hand held A/V camera share an integrated structure while the A/V output unit relates to a standalone unit.
Fig. 4 is a block chart showing that the hand held AN camera and the A/V output unit share an integrated structure while the main unit relates to a standalone unit.

### DETAILED DESCRIPTION OF THE PREFERRED EMBODIMENTS

A combined or standalone hand held A/V camera system is comprised of a main unit, an A/V output unit and a hand held A/V camera with each unit separately provided with a portable battery source and a wire or wireless transmission device when each unit is operating in standalone mode. The transmission includes operational wireless video, audio, A/V mixed signals, or a signal control transmission and receiving device, or a conductor for wired transmission is provided as the coupling for standalone operation. In the standalone operation mode, if any unit is provided with a portable batter source, the wired conductor is used for transmission of source, video, audio, A/V mixed signals, or signal control; or if each unit is provided with a portable battery source, a transmission and receiving device by means of RF electromagnetic wave or infrared is used to engage in wireless transmission of video, audio, A/V mixed signals, or signal control. All units can be combined to one another by a detachable mechanism to easily engage or disengage to other unit by caulking, insertion, locking, rotation or magnetic attraction. When combined, a conductor or a plug-and-socket set is used for coupling to transmit source, video, audio, A/V mixed signals, or signal control; or an RF electromagnetic wave or infrared transmission and receiving device is used to engage wireless transmission of video, audio, A/V mixed signals, or signal control.

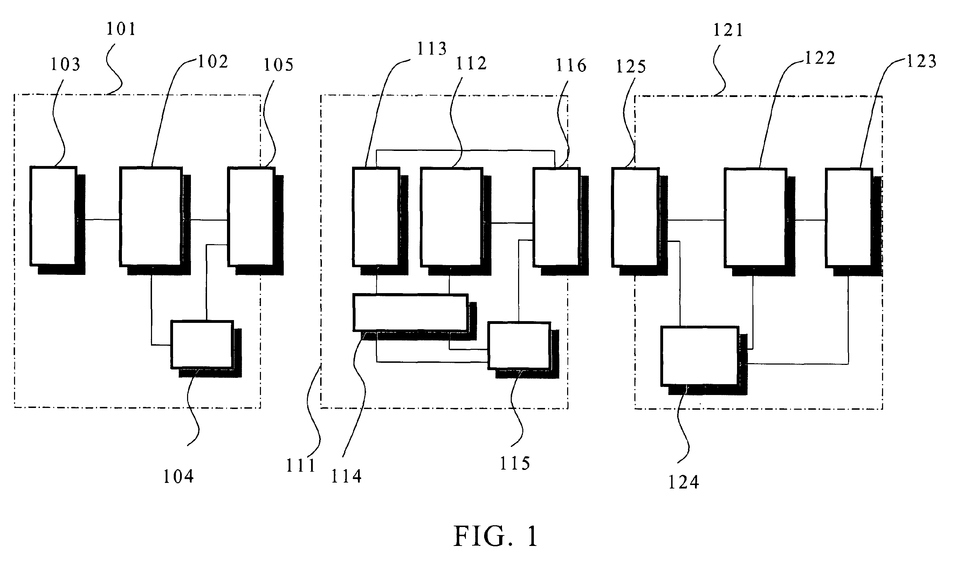

By referring to the accompanying drawings, structural characteristics, functions, and purposes are described as follows:
Referring to Fig. 1 for a schematic view showing a hand held A/V camera system of the present invention, wherein, it is essentially comprised of the following units:
   - a main unit 101: relates to a prior art of hand-held A/V camera, such as a main unit of a hand held still camera or a video camera provided in an independent casing, and the casing also contains an operation interface and main unit related circuit device 102, a mechanism, a storage device for A/V data 103 a portable storage source 104, a transmission device 105 for combined or standalone operation mode, including a wireless transmission and receiving device 105 which may be of a wireless transmission and receiving device, or a conductor or a plug-and-socket set as a transmission interface of video, audio, A/V mixed signals, or signal control; and if not sharing the same structure with other unit, the unit being provided with a detachable mechanism to easily engage or disengage to other unit by caulking, insertion, locking, rotation or magnetic attraction;
   - an AN output unit 111: relates to a local display device of a hand held A/V camera of the prior art provided in an independent casing which further containing an image display 112, an optional speaker 113, an A/V output related circuit 114 and mechanism; and either a portable battery source 115 or a transmission conductor or a plug-and-socket set to introduce the source, and a transmission device 116 to be used in the combined or standalone operation mode including a wireless transmission and receiving device, or a conductor or a plug-and-socket set serving as an interface for the transmission of video, audio, A/V, or signal control; and when the unit does not share the structure with other unit, detachable mechanism to easily engage or disengage to other unit by caulking, insertion, locking, rotation or magnetic attraction is provided; and
   - a hand held A/V camera unit 121: relates to a digital camera or a hand-held camera, such as a V8, Hi8, digital D8 or Dv8 of the prior art provided in an independent casing; the casing containing an A/V camera structure 122 and mechanism that is provided one or more than on function of still photo taking, or video continuous taping, or photo-taking and audio taping, or video continuous taping and audio taping, and an optional data storage 123, or a portable battery source 124, or a transmission conductor of a plug-and-socket set to introduce source, and a transmission device 125 to be used in combined or standalone operation mode including a wireless transmission and receiving device, or a conductor or a plug-and-socket set to serve as a transmission interface for video, audio, A/V mixed signals or signal control; and when the unit does not share the structure with other unit, detachable mechanism to easily engage or disengage to other unit by caulking, insertion, locking, rotation or magnetic attraction is provided.

The combined or standalone hand held A/V camera system is combined in the following methods:
(1) the main unit 101, the AN output unit 111 and the hand-held A/V camera unit 121 are each in its standalone operation mode, and the corresponding transmission devices 105, 116 and 125 used in the combined or standalone mode are used for mutual transmission, including a transmission conductor or a wireless transmission device for transmission of video, audio, A/V mixed signals, signal control, or source power, and normal operation; or
(2) the A/V output unit 111 is combined with the main unit 101 leaving the hand held A/V camera unit 121 in standalone operation mode, and the corresponding transmission devices 105, 116 and 125 used in the combined or standalone mode are used for mutual transmission, including a transmission conductor or a wireless transmission device for transmission of video, audio, A/V mixed signals, signal control, or source power, and normal operation; or
(3) the hand held A/V camera unit 121 is combined with the main unit 101 leaving the hand held AN output unit 121 in standalone operation mode, and the corresponding transmission devices 105, 116 and 125 used in the combined or standalone mode are used for mutual transmission, including a transmission conductor or a wireless transmission device for transmission of video, audio, A/V mixed signals, signal control, or source power, and normal operation; or
(4) the hand held A/V camera unit 121 is combined with the A/V output unit 111 leaving the main unit 101 in standalone operation mode, and the corresponding transmission devices 105, 116 and 125 used in the combined or standalone mode are used for mutual transmission, including a transmission conductor or a wireless transmission device for transmission of video, audio, A/V mixed signals, signal control, or source power, and normal operation.

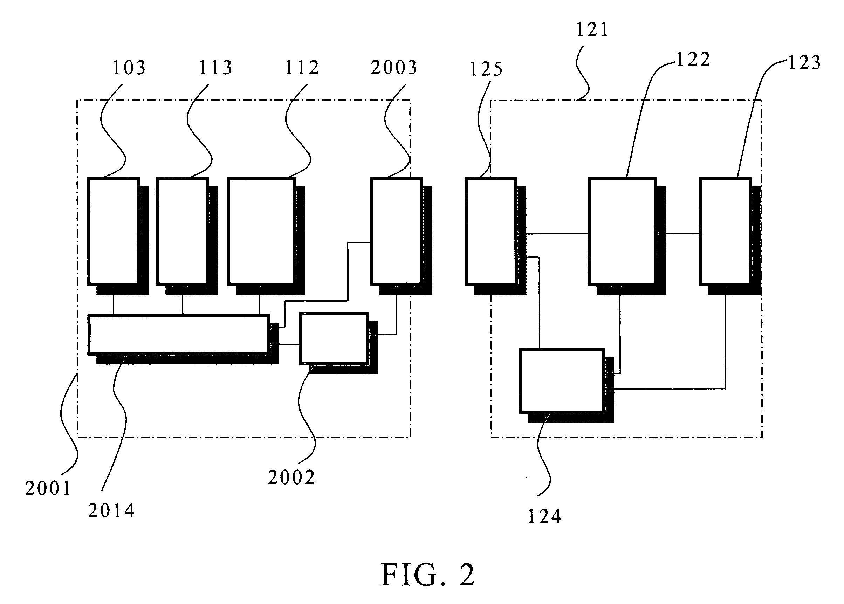

Referring to Fig. 2 for a block chart showing that the main unit and the A/V output unit share an integrated structure while the hand held AN camera being related to a standalone unit; wherein, the main unit 101 and the A/V output unit 111 share the integrated structure 2001 containing also a related combined circuit 2014 and mechanism, a data storage 103, an image display 112, a speaker 113, and an integrated transmission device 2003 to be used for combined or standalone operation mode, an integrated portable battery source 2002, an independent portable battery source 124 provided to the standalone hand held A/V camera unit, and a transmission device 125 for combined or standalone operation mode; between the structure of the hand held camera unit 121 and the integrated structure 2001 of the main unit 101 and the A/V output unit 111, standalone operation is permitted, and the integrated transmission device 2003 allowing combined or standalone operation mode, and the transmission device 125 also allowing the combined or standalone operation mode can be used for mutual transmission between both structures including by means of a transmission conductor coupling, or by means of RF electromagnetic wave, or infrared transmission and receiving device to execute wireless for the transmission of video, audio, A/V mixed signals, or signal control; or in combined operation of both structures, a transmission conductor or a plug-and-socket set being used to transmit source, video, audio, A/V mixed signals, or power of the source, or signal control.

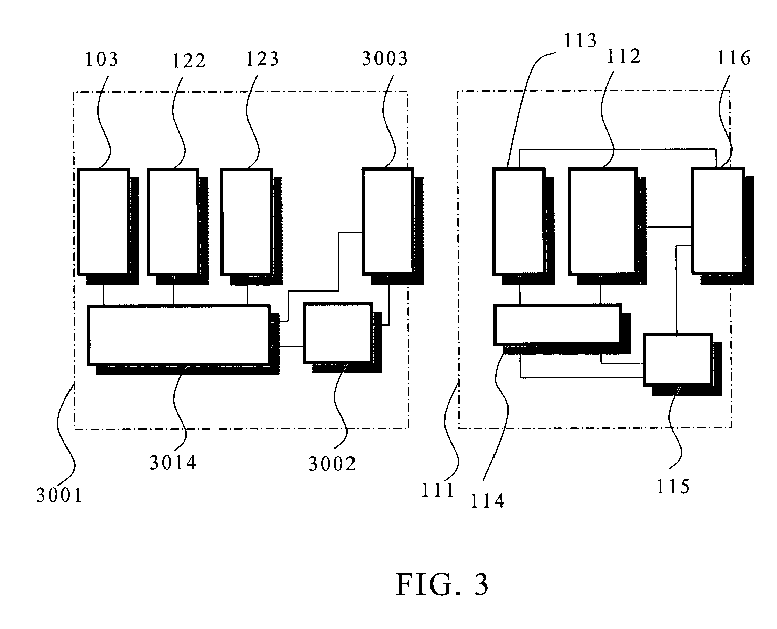

Fig. 3 is a block chart showing that the main unit and the hand held AN camera share an integrated structure while the A/V output unit relates to a standalone unit; the main unit 101 and the A/V camera unit 122 share the integrated structure 3001 containing also a related combined circuit 3014 and mechanism, a data storage 103, a hand held A/V camera unit 121, another data storage 123, and an integrated transmission device 3003 to be used for combined or standalone operation mode, an integrated portable battery source 3002; the A/V output unit 111 being an independent unit also containing separately a portable battery sour 115, and a transmission device 116 for combined or standalone operation mode; between the structure of the A/V output unit 111 and the integrated structure 3001 of the main unit 101 and the A/V camera unit 121, standalone operation is permitted, and the integrated transmission device 3001 allowing combined or standalone operation mode, and the transmission device 116 also allowing the combined or standalone operation mode can be used for mutual transmission between both structures including by means of a transmission conductor coupling, or by means of RF electromagnetic wave, or infrared transmission and receiving device to execute wireless for the transmission of video, audio, AN mixed signals, or signal control; or in combined operation of both structures, a transmission conductor or a plug-and-socket set being used to transmit source, video, audio, A/V mixed signals, or power of the source, or signal control.

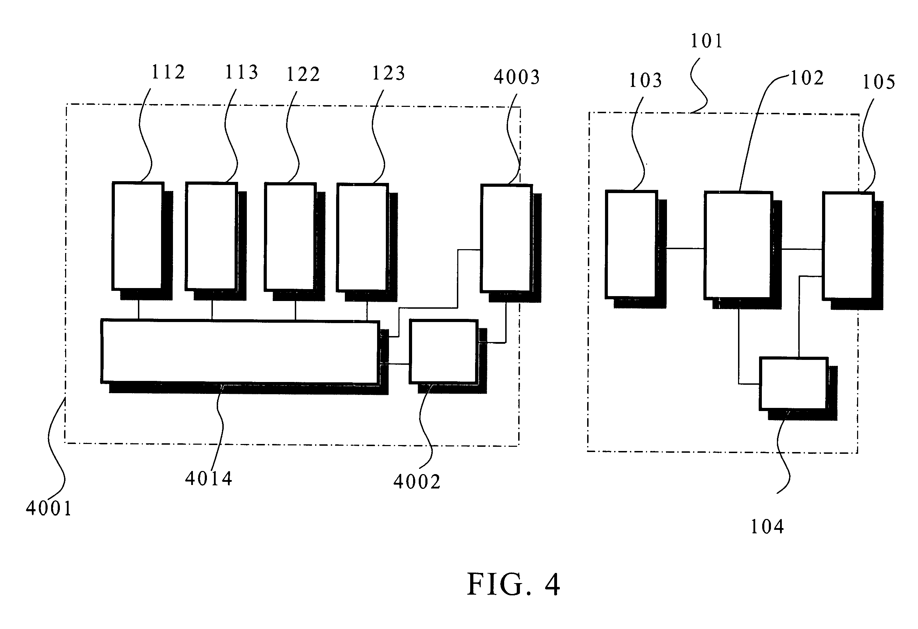

Fig. 4 is a block chart showing that the hand held A/V camera and the A/V output unit share an integrated structure while the main unit relates to a standalone unit; wherein, the hand held A/V camera unit 121 and the A/V output unit 111 share the integrated structure 4001 containing also a related combined circuit 4014 and mechanism, the image display 112, the speaker 113, the A/V structural device 122, the data storage device 123, an integrated transmission device 4003 to be used for combined or standalone operation mode, and the integrated portable battery source 104 separately provided for the standalone main unit 101, and the transmission device 105 for combined or standalone operation mode; between the structure of the main unit 101 and the integrated structure of the hand held A/V camera unit 121 and the A/V output unit 111, standalone operation is permitted, and the integrated transmission device 4003 allowing combined or standalone operation mode, and the transmission device 103 also allowing the combined or standalone operation mode can be used for mutual transmission between both structures including by means of a transmission conductor coupling, or by means of RF electromagnetic wave, or infrared transmission and receiving device to execute wireless for the transmission of video, audio, A/V mixed signals, or signal control; or in combined operation of both structures, a transmission conductor or a plug-and-socket set being used to transmit source, video, audio, A/V mixed signals, or power of the source, or signal control.

Each structure allowing combined or standalone operation in the combined or standalone hand held A/V system is contained in its respectively casing that also allows combined or standalone operation, and a transmission device separately provided for the combined or standalone operation to execute the transmission of video, audio, A/V mixed signals, and an optional source transmission device when required; the transmission device used for the transmission of video, audio, AN mixed signals or signal control varies depending on the specific circuit function and structural status of the main unit 101, the AN output unit 111 and the hand held AN camera unit, as well as the combined or standalone operation conditions; transmission means and devices used for the transmission of video, audio, A/V mixed signals, or signal control contains one or any combination of the following methods:
(1) A plug-and-socket set is provided to each unit that allows combined operation so to transmit the source power, video, audio, A/V mixed signals, or signal control when it is combined to another unit;
(2) A fixed transmission conductor may be of retractable structure to be provided between each unit that allows combined or standalone operation so that it is applicable in combined and standalone operation mode, and the conductor includes the section that can be retracted for storage;
(3) A detachable transmission conductor, provided at both ends each a plug-and-socket set to be adaptive to the plug-and-socket set of each unit allowing combined or standalone operation so that when each unit is in standalone operation mode, both of the plug-and-socket sets provided on both ends of the transmission conductor respectively are plugged to each unit for the transmission of source, video, audio, A/V mixed signals, or signal control; when the conductor is used for transmission, an independent portable battery source can be separately provided to each unit that allows combined or standalone operation, or not all the units are necessarily provided with a specific portable battery source; and/or
(4) A wireless device for the transmission of video, audio, A/V mixed signals, or signal control relates to a one-way or two-way transmission and receiving structure by means of RF electromagnetic wave or infrared provided to each unit that allows combined or standalone operation, or to its integrated structure for the transmission of video, audio, A/V mixed signals, or signal control.

The portable source provided to each unit in the combined or standalone hand held A/V camera system is recharged by one or any combination of the following methods:
(1) Each unit is independently recharged by an external charging source;
(2) Recharged by a battery unit that is individually replaceable
(3) All the units when combined are recharged jointly by an external source; and/or
(4) Mutually recharged among the battery sources of all the units.

In addition to being applied in an A/V camera system that allows combined or standalone operation, the combined or standalone hand held A/V camera system can also has its principal functions incorporated with any other hand held electric appliances. For example, a personal digital assistant (PDA) or global position system (GPS), or other add-on circuit device can be adapted to any of the units in the combined or standalone hand held A/V camera system of the present invention.

The combined or standalone hand held A/V camera system of the present invention for being adaptable to a digital or a analogy camera and a digital or analog hand held tape recorder; allowing unique combined and standalone operating modes to facilitate shooting even at poor angles, or continuous image display, provides normal control and operation performances either in combined or standalone operating mode. Therefore, this application is duly filed accordingly.

## Claims

1. A combined or standalone hand held A/V camera system including a main unit, an A/V output unit and a hand held A/V camera with each unit separately provided with a portable battery source and a wire or wireless transmission device when each unit is operating in standalone mode; the transmission includes operational wireless video, audio, A/V mixed signals, or a signal control transmission and receiving device, or a conductor for wired transmission is provided as the coupling for standalone operation; in the standalone operation mode, if any unit is provided with a portable batter source, the wired conductor is used for transmission of source, video, audio, A/V mixed signals, or signal control; or if each unit is provided with a portable battery source, a transmission and receiving device by means of RF electromagnetic wave or infrared is used to engage in wireless transmission of video, audio, A/V mixed signals, or signal control; all units can be combined to one another by a detachable mechanism to easily engage or disengage to other unit by caulking, insertion, locking, rotation or magnetic attraction; when combined, a conductor or a plug-and-socket set is used for coupling to transmit source, video, audio, A/V mixed signals, or signal control; or an RF electromagnetic wave or infrared transmission and receiving device is used to engage wireless transmission of video, audio, AN mixed signals, or signal control; and is essentially comprised of:
- a main unit 101: relates to a prior art of hand-held AN camera, such as a main unit of a hand held still camera or a video camera provided in an independent casing, and the casing also contains an operation interface and main unit related circuit device 102, a mechanism, a storage device for AN data 103 a portable storage source 104, a transmission device 105 for combined or standalone operation mode, including a wireless transmission and receiving device 105 which may be of a wireless transmission and receiving device, or a conductor or a plug-and-socket set as a transmission interface of video, audio, AN mixed signals, or signal control; and if not sharing the same structure with other unit, the unit being provided with a detachable mechanism to easily engage or disengage to other unit by caulking, insertion, locking, rotation or magnetic attraction;
- an AN output unit 111: relates to a local display device of a hand held A/V camera of the prior art provided in an independent casing which further containing an image display 112, an optional speaker 113, an A/V output related circuit 114 and mechanism; and either a portable battery source 115 or a transmission conductor or a plug-and-socket set to introduce the source, and a transmission device 116 to be used in the combined or standalone operation mode including a wireless transmission and receiving device, or a conductor or a plug-and-socket set serving as an interface for the transmission of video, audio, AN, or signal control; and when the unit does not share the structure with other unit, detachable mechanism to easily engage or disengage to other unit by caulking, insertion, locking, rotation or magnetic attraction is provided; and
- a hand held A/V camera unit 121: relates to a digital camera or a hand-held camera, such as a V8, Hi8, digital D8 or Dv8 of the prior art provided in an independent casing; the casing containing an A/V camera structure 122 and mechanism that is provided one or more than on function of still photo taking, or video continuous taping, or photo-taking and audio taping, or video continuous taping and audio taping, and an optional data storage 123, or a portable battery source 124, or a transmission conductor of a plug-and-socket set to introduce source, and a transmission device 125 to be used in combined or standalone operation mode including a wireless transmission and receiving device, or a conductor or a plug-and-socket set to serve as a transmission interface for video, audio, A/V mixed signals or signal control; and when the unit does not share the structure with other unit, detachable mechanism to easily engage or disengage to other unit by caulking, insertion, locking, rotation or magnetic attraction is provided.

2. A combined or standalone hand held A/V camera system as claimed in Claim 1, wherein, the main unit 101, the A/V output unit 111 and the hand-held A/V camera unit 121 are each in its standalone operation mode, and the corresponding transmission devices 105, 116 and 125 used in the combined or standalone mode are used for mutual transmission, including a transmission conductor or a wireless transmission device for transmission of video, audio, A/V mixed signals, signal control, or source power, and normal operation.

3. A combined or standalone hand held A/V camera system as claimed in Claim 1, wherein, the A/V output unit 111 is combined with the main unit 101 leaving the hand held A/V camera unit 121 in standalone operation mode, and the corresponding transmission devices 105, 116 and 125 used in the combined or standalone mode are used for mutual transmission, including a transmission conductor or a wireless transmission device for transmission of video, audio, A/V mixed signals, signal control, or source power, and normal operation.

4. A combined or standalone hand held A/V camera system as claimed in Claim 1, wherein, the hand held A/V camera unit 121 is combined with the main unit 101 leaving the hand held A/V output unit 121 in standalone operation mode, and the corresponding transmission devices 105, 116 and 125 used in the combined or standalone mode are used for mutual transmission, including a transmission conductor or a wireless transmission device for transmission of video, audio, AN mixed signals, signal control, or source power, and normal operation.

5. A combined or standalone hand held A/V camera system as claimed in Claim 1, wherein, the hand held A/V camera unit 121 is combined with the A/V output unit 111 leaving the main unit 101 in standalone operation mode, and the corresponding transmission devices 105, 116 and 125 used in the combined or standalone mode are used for mutual transmission, including a transmission conductor or a wireless transmission device for transmission of video, audio, A/V mixed signals, signal control, or source power, and normal operation.

6. A combined or standalone hand held A/V camera system as claimed in Claim 1, wherein, 7the main unit 101 and the A/V output unit 111 share the integrated structure 2001 containing also a related combined circuit 2014 and mechanism, a data storage 103, an image display 112, a speaker 113, and an integrated transmission device 2003 to be used for combined or standalone operation mode, an integrated portable battery source 2002, an independent portable battery source 124 provided to the standalone hand held A/V camera unit, and a transmission device 125 for combined or standalone operation mode; between the structure of the hand held camera unit 121 and the integrated structure 2001 of the main unit 101 and the A/V output unit 111, standalone operation is permitted, and the integrated transmission device 2003 allowing combined or standalone operation mode, and the transmission device 125 also allowing the combined or standalone operation mode can be used for mutual transmission between both structures including by means of a transmission conductor coupling, or by means of RF electromagnetic wave, or infrared transmission and receiving device to execute wireless for the transmission of video, audio, A/V mixed signals, or signal control; or in combined operation of both structures, a transmission conductor or a plug-and-socket set being used to transmit source, video, audio, AN mixed signals, or power of the source, or signal control.

7. A combined or standalone hand held A/V camera system as claimed in Claim 1, wherein, the main unit 101 and the A/V camera unit 122 share the integrated structure 3001 containing also a related combined circuit 3014 and mechanism, a data storage 103, a hand held A/V camera unit 121, another data storage 123, and an integrated transmission device 3003 to be used for combined or standalone operation mode, an integrated portable battery source 3002; the A/V output unit 111 being an independent unit also containing separately a portable battery sour 115, and a transmission device 116 for combined or standalone operation mode; between the structure of the AN output unit 111 and the integrated structure 3001 of the main unit 101 and the AN camera unit 121, standalone operation is permitted, and the integrated transmission device 3001 allowing combined or standalone operation mode, and the transmission device 116 also allowing the combined or standalone operation mode can be used for mutual transmission between both structures including by means of a transmission conductor coupling, or by means of RF electromagnetic wave, or infrared transmission and receiving device to execute wireless for the transmission of video, audio, A/V mixed signals, or signal control; or in combined operation of both structures, a transmission conductor or a plug-and-socket set being used to transmit source, video, audio, A/V mixed signals, or power of the source, or signal control.

8. A combined or standalone hand held A/V camera system as claimed in Claim 1, wherein, the hand held AN camera unit 121 and the A/V output unit 111 share the integrated structure 4001 containing also a related combined circuit 4014 and mechanism, the image display 112, the speaker 113, the A/V structural device 122, the data storage device 123, an integrated transmission device 4003 to be used for combined or standalone operation mode, and the integrated portable battery source 104 separately provided for the standalone main unit 101, and the transmission device 105 for combined or standalone operation mode; between the structure of the main unit 101 and the integrated structure of the hand held AN camera unit 121 and the A/V output unit 111, standalone operation is permitted, and the integrated transmission device 4003 allowing combined or standalone operation mode, and the transmission device 103 also allowing the combined or standalone operation mode can be used for mutual transmission between both structures including by means of a transmission conductor coupling, or by means of RF electromagnetic wave, or infrared transmission and receiving device to execute wireless for the transmission of video, audio, A/V mixed signals, or signal control; or in combined operation of both structures, a transmission conductor or a plug-and-socket set being used to transmit source, video, audio, A/V mixed signals, or power of the source, or signal control

9. A combined or standalone hand held A/V camera system as claimed in Claim 1, wherein, each structure allowing combined or standalone operation in the combined or standalone hand held A/V system is contained in its respectively casing that also allows combined or standalone operation, and a transmission device separately provided for the combined or standalone operation to execute the transmission of video, audio, A/V mixed signals, and an optional source transmission device when required; the transmission device used for the transmission of video, audio, A/V mixed signals or signal control varies depending on the specific circuit function and structural status of the main unit 101, the A/V output unit 111 and the hand held A/V camera unit, as well as the combined or standalone operation conditions; transmission means and devices used for the transmission of video, audio, A/V mixed signals, or signal control contains one or any combination of the following methods:
(1) A plug-and-socket set is provided to each unit that allows combined operation so to transmit the source power, video, audio, A/V mixed signals, or signal control when it is combined to another unit;
(2) A fixed transmission conductor may be of retractable structure to be provided between each unit that allows combined or standalone operation so that it is applicable in combined and standalone operation mode, and the conductor includes the section that can be retracted for storage;
(3) A detachable transmission conductor, provided at both ends each a plug-and-socket set to be adaptive to the plug-and-socket set of each unit allowing combined or standalone operation so that when each unit is in standalone operation mode, both of the plug-and-socket sets provided on both ends of the transmission conductor respectively are plugged to each unit for the transmission of source, video, audio, A/V mixed signals, or signal control; when the conductor is used for transmission, an independent portable battery source can be separately provided to each unit that allows combined or standalone operation, or not all the units are necessarily provided with a specific portable battery source; and/or
(4) A wireless device for the transmission of video, audio, A/V mixed signals, or signal control relates to a one-way or two-way transmission and receiving structure by means of RF electromagnetic wave or infrared provided to each unit that allows combined or standalone operation, or to its integrated structure for the transmission of video, audio, A/V mixed signals, or signal control.

10. A combined or standalone hand held A/V camera system as claimed in Claim 1,
wherein, the portable source provided to each unit in the combined or standalone hand held A/V camera system is recharged by one or any combination of the following methods:
(1) Each unit is independently recharged by an external charging source;
(2) Recharged by a battery unit that is individually replaceable
(3) All the units when combined are recharged jointly by an external source; and/or
(4) Mutually recharged among the battery sources of all the units.

11. A combined or standalone hand held A/V camera system as claimed in Claim 1, wherein, in addition to being applied in an A/V camera system that allows combined or standalone operation, the combined or standalone hand held A/V camera system can also has its principal functions incorporated with any other hand held electric appliances; for example, a personal digital assistant (PDA) or global position system (GPS), or other add-on circuit device can be adapted to any of the units in the combined or standalone hand held A/V camera system of the present invention.

12. A combined or standalone hand held AN camera system that allows combined or standalone operation, the system comprising a main unit, an A/V output unit and hand-held A/V camera units, wherein each unit is separately provided with a portable power source, and with a wired or wireless transmission device for use when each unit is in standalone operation mode.
